# EUROPÄISCHE PATENTSCHRIFT

(11) **EP 1 669 182 B1**
(45) Veröffentlichungstag und Bekanntmachung des Hinweises auf die Patenterteilung: **21.07.2010**
(21) Anmeldenummer: 05025867.2
(22) Anmeldetag: 28.11.2005
(51) Int. Cl.: B29C 31/04, B29C 41/36, B05B 17/06

(54) **Verfahren zur Herstellung von Folien oder Compound-Formteilen**
Method for the production of films or moulded parts composition
Méthode pour la fabrication de films ou de composition de pièces moulées

(30) Priorität: 09.12.2004 DE 102004059218
(43) Veröffentlichungstag der Anmeldung: 14.06.2006
(73) Patentinhaber: Hennecke GmbH, 51379 Leverkusen (DE)
(72) Erfinder: Kleba, Ingo, Dr., 53639 Königswinter (DE); Wirth, Jürgen, 51147 Köln (DE); Berghahn, Frank, 53639 Königswinter (DE)
(74) Vertreter: Gosdin, Michael

(56) Entgegenhaltungen:
- EP-A1- 0 279 323
- EP-B1- 0 631 525

## Beschreibung

Die Erfindung betrifft ein Verfahren und eine Vorrichtung zur Herstellung von Folien (Häuten) oder Compound-Formteilen.

Bei der Herstellung von ein- oder mehrschichtigen Folien (Häuten) oder Compound-Formteilen, bei denen mindestens eine Schicht aus Reaktivkunststoff besteht, wird diese Schicht durch Sprühen in eine Kavität bzw. auf ein Substrat aufgetragen.

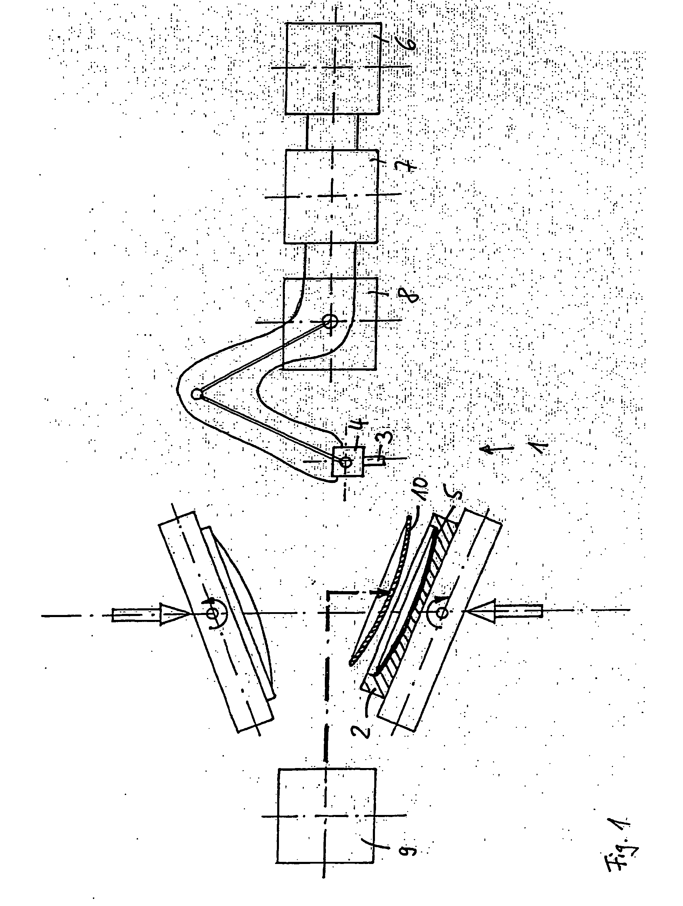

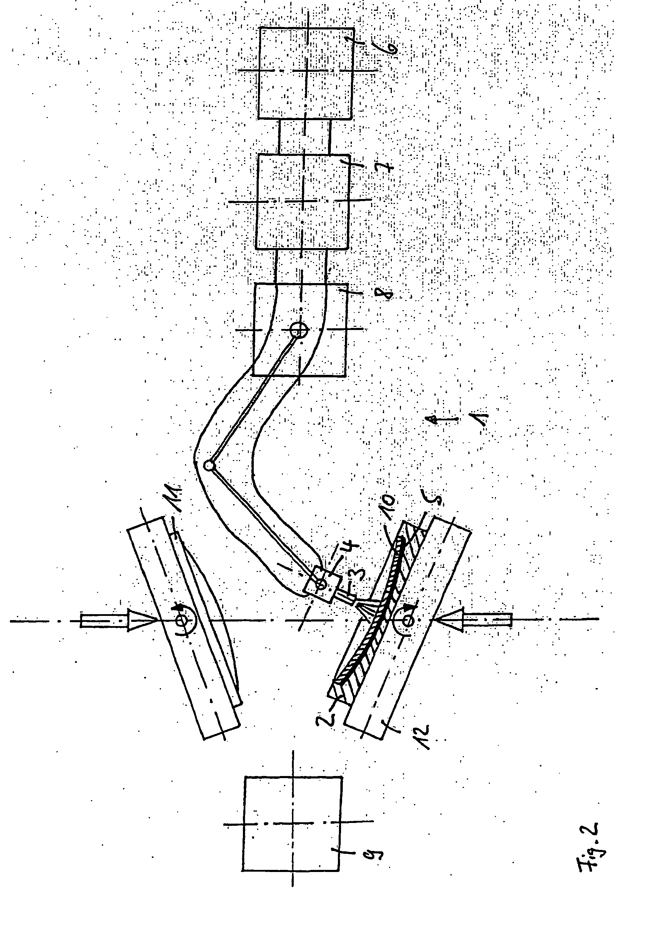

Die Figuren 1 und 2 zeigen beispielhaft den Stand der Technik bei der Herstellung von Compound-Formteilen. Zunächst wird in die Kavität des Werkzeugunterteils durch den Sprühmischkopf eine erste Schicht aus Reaktivkunststoff aufgetragen. Dann wird mittels des Beschickungsautomaten ein Substrat auf diese erste Sprühschicht aufgelegt und auf das Substrat eine weitere Schicht aus Reaktivkunststoff aufgesprüht. Anschließend werden die untere und die obere Werkzeughälfte zusammengefahren und das Kunststoff - Reaktivgemisch reagiert aus, wobei es mit dem Substrat eine innige Verbindung eingeht. Nach dem so genannten Aushärten fährt die Presse wieder auf und das fertige Compound-Formteil kann entnommen werden.

Eine Variante dieses Prozesses besteht darin, das Substrat außerhalb der Kavität beidseitig zu besprühen und erst dann in das Werkzeug einzulegen.

Da die Fahrgeschwindigkeiten der Auftragsautomaten, d.h. die erzielbare Geschwindigkeit der Sprühdüse relativ zu der zu beschichtenden Oberfläche, an Grenzen stößt, hat man versucht, Sprühstrahlen mit möglichst breitem Sprühbild zu erzeugen. Dabei wurden verschiedene Varianten ausprobiert. Eine davon liegt in der Verwendung einer Flachstrahldüse, die schon von sich aus ein etwas breiteres Sprühbild hat, und gleichzeitiger Vergrößerung des Abstands zwischen Sprühdüse und zu besprühender Oberfläche. Das führt jedoch zu einer schlechten Masseverteilung, nämlich dem so genannten "Knochenprofil", d.h. zu Masseanhäufungen an den Rändern des Sprühstrahls. Ein weiterer Nachteil dabei ist die Erzeugung von so genanntem "Overspray", d.h. von feinem Sprühnebel, der sich im gesamten Produktionsraum verteilt und deshalb abgesaugt werden muss, um das Personal vor gesundheitlichen Schäden zu bewahren.

Abgesehen von dem erhöhten, anlagentechnischen Aufwand bedeutet das Absaugen des Oversprays auch Materialverlust und zusätzliche Wartungszeiten für die Absaug- und Filteranlagen.

Eine weitere Variante, den Sprühstrahl zu verbreitern, besteht darin, eine Rundstrahldüse zu verwenden und den Rundstrahl durch seitlich auf ihn gerichtete Luftdüsen zu einem Flachstrahl umzuformen. Auch das erzeugt jedoch eine ungleichmäßige Masseverteilung. Es ergibt sich dabei nämlich das so genannte "Linsenprofil", eine Masseanhäufung in der Mitte des Sprühstrahls. Auch hierbei ist insbesonders durch die Luftzugabe die Erzeugung von Overspray ein gravierender Mangel.

Es ist auch möglich, bei Rundstrahldüsen wiederum den Abstand zwischen Sprühdüse und zu besprühender Fläche zu vergrößern und dem Reaktivgemisch intern Luft beizumischen. Das ergibt zwar ein breiteres "Sprühbild", allerdings mit einer sehr schlechten Masseverteilung, da eine "Randausdünnung" erfolgt. Das heißt, an den Rändern der aufgesprühten Schicht ist zu wenig Material. Auch hierbei wird schädliches Overspray erzeugt.

All diesen zuvor beschriebenen Maßnahmen haftet ein weiterer gravierender Nachteil an: Es geht nämlich "Randschärfe" verloren, d.h. insbesondere an den Rändern der Kavität kann keine exakte Kontur gesprüht werden, so dass über den Rand hinaus die Dichtflächen besprüht werden.

Neben der Forderung nach minimierten Taktzeiten, gibt es die weitere Aufgabenstellung, die Masseverteilung in den Sprühschichten, d.h. die Sprühschichtdicke pro Flächeneinheit beliebig gestalten zu können. Das kann heißen, gleiche Schichtdicke über der gesamten zu besprühenden Fläche oder auch dickere Schichtstärken an vorbestimmten Stellen des Formteils bzw. der Sprühhaut zu erzeugen.

Um dieser weiteren Forderung gerecht zu werden, ist es erforderlich, außer der Variation der Sprühmenge und/oder der Fahrgeschwindigkeit des Sprühmischkopfes auch die Sprühstrahlbreite während des Sprühvorgangs verstellen zu können.

In der Vergangenheit wurde versucht, diese Aufgabe mit den bereits beschriebenen Maßnahmen zu lösen: Variation der Zugabe von Luft bzw. Variation des Sprühabstands. Dabei ergaben sich jedoch wiederum die gleichen bereits beschriebenen Mängel: ungleiche Masseverteilung, Erzeugung von Overspray sowie unsaubere Randschärfe.

Die Aufgabe der vorliegenden Erfindung besteht daher darin, ein einfaches und wirtschaftliches Verfahren und eine Vorrichtung für die Herstellung goßflächiger, komplexer Compound-Formteile oder Folien (Häute) für die Großserienfertigung zu finden, bei dem die oben beschrieben Nachteile vermieden werden.

Die Erfindung betrifft ein Verfahren zur Herstellung ein- oder mehrschichtiger Folien oder Compound-Formteile, die wenigstens eine Schicht aus Reaktivkunststoff aufweisen, bei dem das flüssige Reaktivgemisch aus einer Sprühdüse mit einem Sprühstrahl auf eine Oberfläche aufgesprüht wird, dadurch gekennzeichnet, dass der Sprühstrahl in Schwingung versetzt wird und die Amplitude und/oder Frequenz der Schwingung während des Sprühvorgangs verstellt wird und dadurch die Sprühfläche verändert wird.

Dabei kann die zu besprühende Oberfläche ein zu beschichtendes Substrat oder ein Teil der Form, beispielsweise die untere Form- oder Werkzeughälfte, sein. Bevorzugt wird als Reaktivkunststoff Polyurethan verwendet.

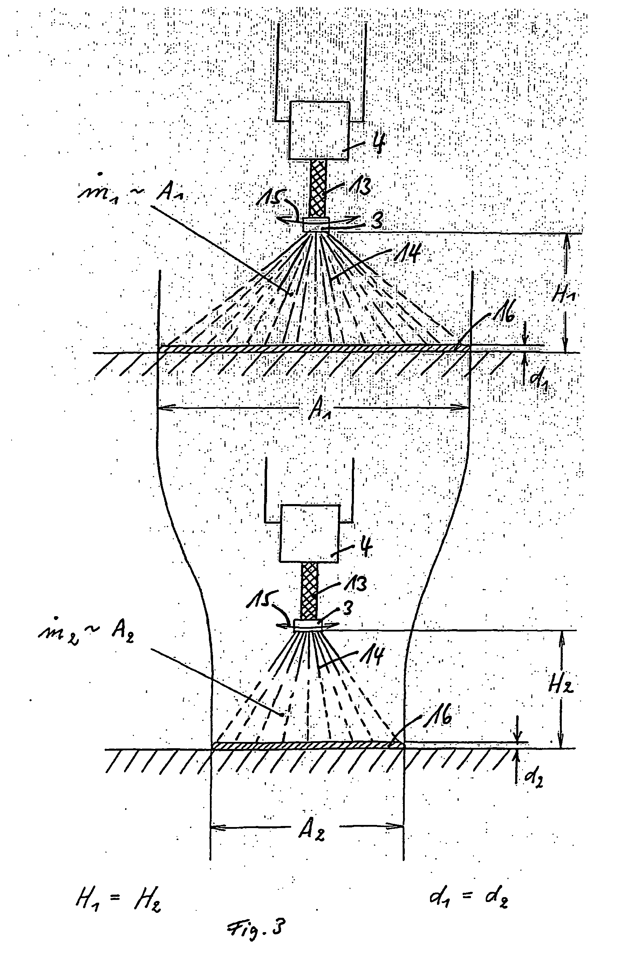

Die Figuren 3, 4 und 5 veranschaulichen die erfindungsgemäße Lösung. Sie zeigen ein Verfahren, bei dem der Sprühstrahl während des Sprühauftragens in Schwingungen versetzt wird und die Sprühbreite bzw. Sprühfläche während des Sprühauftragens verändert wird, indem die Amplitude und/oder die Frequenz der Schwingung verstellt wird.

Die EP 0 279 323 A1 offenbart ein Verfahren gemäß dem Oberbegriff des Anspruchs 1 sowie eine Vorrichtung gemäß dem Oberbegriff des Anspruchs 15. Sie beschreibt eine spezielle Sprühvorrichtung die aus einem Auftragsrohr mit einer Vielzahl von Sprühdüse besteht. Damit die Vorrichtung während des Betriebes nicht durch ausreagierendes Reaktionsgemisch zuwachsen kann und damit ein gleichmäßiger Auftrag zum Erzielen eines einwandfreien Endproduktes auch bei größeren Arbeitsbreiten gewährleistet ist, ist vorgesehen, dass das Austragsrohr mit einem Vibrator verbunden ist. Dabei erzeugt der Vibrator translatorische Schwingungen in Achsrichtung des Auftragsrohres bzw. senkrecht oder quer zu demselben.

Die EP 0 631 525 B1 offenbart ein Verfahren und eine Vorrichtung zum automatischen Beschichten von Gegenständen (z.B. Fahrzeugkarosserien) mit einer Spritzvorrichtung, die wenigsten ein Spritzwerkzeug enthält, das auf durch Programme festgelegten Bahnen bewegt wird. Um mit einem geringen Aufwand an Bewegungsprogrammen und mit weniger Speicherkapazität für die Bewegungsprogramme Objekte auch bei verschiedenen Geschwindigkeiten, mit denen die Objekte in der einen Richtung eines kartesischen Koordinatensystems an wenigstens einem Beschichtungswerkzeug vorbeibewegt werden, mit einer gewünschten Farbmenge beschichten zu können, sieht die Erfindung vor, dass Programme mit den Bewegungsbahnen des Spritzwerkzeugs gespeichert werden und dass bei der Bewegung des zu beschichtenden Gegenstands längs eines am Spritzwerkzeug vorbeiführende Wegs in Abhängigkeit von der jeweils im Bereich des Spritzwerkzeugs vorhandenen Fläche und der Kontur des Gegenstandes die Bewegungsbahnen der Fläche den Konturdaten zur Erzeugung einer resultierenden vom Spritzwerkzeug zurückzulegenden Bahn überlagert werden. Dabei wird eine dreiachsige Vorrichtung bzw. eine vierachsige Vorrichtung beschrieben, bei denen Spritzwerkzeuge translatorisch oszillierend über eine zu beschichtende Karosserieoberfläche bewegt werden.

In der DE-OS-35 30 702 wird eine Sprühvorrichtung mit einer nachgeschalteten Lochbrause beschrieben, die feinste Streuaerosole beseitigen soll, wobei diese Lochbrause in Vibration versetzt werden kann, was die Gleichmäßigkeit der aufgesprühten Schaumschicht verbessert.

Eine Veränderung der Vibration, das heißt der Amplitude und/oder der Frequenz der Schwingung während des Sprühvorgangs ist jedoch bei dieser Vorrichtung nicht vorgesehen. Insbesondere wird in DE-OS-35 30 702 nicht offenbart, dass mit dieser Maßnahme unterschiedliche Sprühbreite eingestellt werden können.

Somit ist das Verfahren, den Sprühstrahl in Schwingungen zu versetzen und die Sprühstrahlbreite bzw. Sprühfläche während des Sprühauftragens zu varüeren indem die Amplitude und/oder die Frequenz der Schwingung verstellt wird, gegenüber dem Stand der Technik neu.

Das erfindungsgemäße Verfahren liefert den entscheidenden Vorteil, unterschiedliche Sprühstrahlbreiten einstellen zu können, ohne den Sprühabstand verändern zu müssen. Damit bleibt der wichtige Produktionsparameter Sprühabstand für andere Produktionserfordernisse, die sich z.B. durch geometrische Zwänge im dreidimensionalen Raum ergeben, frei. Dadurch wird für den Sprühprozess ein zusätzlicher Freiheitsgrad gewonnen.

Bei dem erfindungsgemäßen Verfahren besteht auch nicht das Erfordernis, mit Luftzugabe den Sprühstrahl manipulieren zu müssen. Damit ist der Oversprayanteil im Sprühprozess extrem minimierbar.

Mit dem erfindungsgemäßen Verfahren sind maximale Sprühbreiten von bis zu 1000 mm möglich, wobei der auf die Sprühfläche auftreffende Sprühstrahl mit einer verstellbaren Amplitude von > 0 mm bis 500 mm, bevorzugt von 0,1 bis 400 mm, besonders bevorzugt von 0,5 bis 300 mm verstellbaren Amplitude schwingt.

Die Frequenz der Schwingung ist einstellbar im Bereich von 5 bis 400 Hz, bevorzugt von 10 bis 300 Hz, besonders bevorzugt von 20 bis 200 Hz.

Die für das erfindungsgemäße Verfahren erforderliche Frequenz ist abhängig von der Fahrgeschwindigkeit des Auftragsautomaten, der den Mischkopf und die Sprühdüse und damit auch den Sprühstrahl bewegt, sowie von der Breite des auf der Sprühfläche auftreffenden Sprühstrahls quer zur Schwingungsebene des Sprühmischkopfes. Die Frequenz wird dabei bevorzugt so gewählt, dass zwischen den Schwingungswendepunkten keine vom Sprühstrahl unbenetzten Flächen übrig bleiben. Die erforderliche Schwingungsfrequenz ist also proportional zur Fahrgeschwindigkeit des Auftragsautomaten und umgekehrt proportional zur Sprühstrahlbreite quer zur Schwingungsebene.

Die Änderung der Amplitude und/oder der Frequenz der Schwingung während des Sprühauftragens kann stetig oder auch in einer Rampenfunktion erfolgen.

In einer weiteren Ausgestaltung des erfindungsgemäßen Verfahrens kann auch die Austragsmenge an Reaktivgemisch während der Veränderung der Sprühstrahlbreite bzw. -fläche variiert werden. Das liefert die Möglichkeit, die Dicke der Sprühschicht beliebig gestalten zu können.

Es ist auch möglich, die Fahrgeschwindigkeit des Auftragsautomaten während der Veränderung der Sprühstrahlbreite bzw. -fläche zu variieren. Z.B. kann in engen Kurven eine Absenkung der Fahrgeschwindigkeit gegenüber der Maximalgeschwindigkeit erforderlich sein.

In einer weiteren Ausgestaltung des erfindungsgemäßen Verfahrens erfolgen die jeweiligen Verstellungen positionsabhängig, und zwar automatisch durch eine Programmsteuerung.

Um den Sprühstrahl in Schwingungen zu versetzen, gibt es verschiedene Möglichkeiten. So kann z.B. der gesamte Sprühmischkopf oder nur die Sprühdüse alleine oder nur die Sprühdüse mit ihrer Anbindung an den Mischkopf zum Schwingen gebracht werden.

Möglich sind auch der Sprühdüse nachgeordnete, schwingende Umlenkelemente.

Als Sprühdüsen sind geeignet sowohl Rundstrahldüsen als auch Breitstrahldüsen.

In einer weiteren Ausgestaltung dieses neuen Verfahrens kann der Schwingung eine zweite, um einen Winkel von > 0°, bevorzugt um einen Winkel von 40° bis 90°, besonders bevorzugt um einen Winkel von 70° bis 90°, ganz besonders bevorzugt um einen Winkel von 90° versetzte Schwingung überlagert werden, wobei die Amplituden der beiden Schwingungen abhängig von einander gesteuert werden.

Weiterhin ist es möglich, dass die größere Amplitude der beiden Schwingungen automatisch durch eine Programmsteuerung rechtwinklig zur Fahrtrichtung des Auftragsautomaten eingestellt wird.

Die Verfahrensvariante, zwei um einen Winkel zueinander versetzte Schwingungsebenen zu haben, ist für den beschriebenen Prozess besonders interessant, weil sie extrem minimierte Sprühauftragszeiten ermöglicht. Bevorzugt beträgt der Winkel dabei 40 bis 90°. Denn dabei gibt es keine Stillstandzeiten des Auftragsautomaten mehr während des Sprühauftragens, weil ein Drehen des Mischkopfes bei Wendepunkten der zu fahrenden Sprühbahn dann nicht mehr erforderlich ist.

Die Erfindung betrifft auch eine Vorrichtung zur Herstellung von ein- oder mehrschichtigen Folien oder Compound-Formteilen, die wenigstens eine Schicht aus Reaktivkunststoff enthalten, umfassend Vorratsbehälter für die Reaktivkomponenten, Dosiereinrichtungen für die Reaktivkomponenten sowie einen Mischkopf und eine Sprühdüse, dadurch gekennzeichnet, dass die Sprühdüse mit einem Schwingungserzeuger verbunden ist, der die Sprühdüse in Schwingung versetzen kann, wobei der Schwingungserzeuger in Amplitude und/oder Frequenz der Schwingung verstellbar ist.

Als Schwingungserzeuger können beispielsweise Elektromagnete eingesetzt werden. Die Amplitude ist dabei durch die Variation der Spannung einstellbar. Ebenso sind mechanische Getriebe mit einer Exenterverstellung zur Schwingungserzeugung geeignet.

Dabei kann die Sprühdüse direkt oder über dazwischen angeordnete Apparateteile mit dem Schwingungserzeuger verbunden sein.

In einer Ausgestaltung der Vorrichtung ist zwischen Mischkopf und Sprühdüse ein elastisches Glied bzw. ein Kugelgelenk oder ein Faltenbalg angeordnet.

Die Erfindung wird nachstehend anhand der folgenden Abbildungen näher erläutert.

Es zeigen
- Fig. 1: eine Vorrichtung zur Herstellung von Compound-Formteilen nach dem Stand der Technik während des Einlegens eines Substrats in die untere Werkzeughälfte auf eine erste Sprühschicht,
- Fig. 2: die gleiche Vorrichtung, jedoch während des Auftragens der zweiten Sprühschicht auf das Substrat,
- Fig. 3: eine schematische Darstellung schwingender Sprühstrahlen, wobei die Breite A₁ des Sprühstrahls von Position 1 auf die Breite A₂ in Position 2 verstellt wird,
- Fig. 4: einen Schnitt durch das in Fig. 5 dargestellte Formteil,
- Fig. 5: ein Formteil, welches nach dem neuen Verfahren in einer Kavität hergestellt wurde.

Figur 1 zeigt eine Vorrichtung 1 zur Herstellung von Compound-Formteilen nach dem Stand der Technik. Zunächst wird auf die Oberfläche der Kavität der unteren Werkzeughälfte 2 durch die Sprühdüse 3, die direkt hinter dem Mischkopf 4 angeordnet ist, eine erste Schicht aus Reaktivgemisch aufgetragen.

Dabei gelangen die Reaktivkomponenten über zugeordnete Leitungen von der Rohstoffvorhaltung 6 zu der Dosieranlage 7. Von der Dosieranlage 7 wiederum werden sie mittels weiterer zugeordneter Leitungen über den Automaten 8 für die Mischkopfführung zum Mischkopf 4 gefördert, dort miteinander vermischt und anschließend durch die Sprühdüse 3 als Reaktivgemisch durch Versprühen aufgetragen.

Bei diesem Vorgang wird der Mischkopf 4 mit der Sprühdüse 3 durch den Automaten 8 so geführt, dass auf der gesamten Oberfläche der Kavität eine gleich dicke Sprühschicht entsteht. Danach wird der Sprühvorgang beendet und der Mischkopf 4 mit der Sprühdüse 3 wird durch den Automaten 8 zur Seite geschwenkt.

Anschließend wird mittels des Beschickungsautomaten 9 ein Substrat 10 auf diese erste Sprühschicht 5 aufgelegt.

Fig. 2 zeigt die gleiche Vorrichtung wie Fig. 1, jedoch während des Auftragens der zweiten Sprühschicht auf das Substrat 10. Nach Beendigung dieses Vorgangs wird der Mischkopf 4 mit der Sprühdüse 3 durch den Automaten 8 wiederum zur Seite geschwenkt und die untere Werkzeughälfte 2 und die obere Werkzeughälfte 11 werden nun durch die Presse 12 zusammengefahren und der eigentliche Kunststoff-Reaktionsprozess kann beginnen, indem das noch flüssige Kunststoff-Reaktivgemisch ausreagiert und mit dem Substrat 10 eine innige Verbindung eingeht.

Nach dem so genannten Aushärten fährt die Presse 12 wieder auf und das fertige Compound-Formteil kann entnommen werden.

Die Figuren 3, 4 und 5 veranschaulichen das erfindungsgemäße Verfahren. Figur 3 zeigt den Mischkopf 4 mit der Sprühdüse 3 schematisch in einer Position 1 (obere Hälfte der Figur 3) und in einer Position 2 (untere Hälfte der Figur 3). Zwischen Mischkopf 4 und Sprühdüse 3 ist ein elastisches Glied 13 angeordnet. Durch einen Schwingungserzeuger (nicht dargestellt) wird die Sprühdüse 3 und damit die Sprühstrahlen 14 in Schwingungen versetzt. Die Schwingungen sind schematisch durch die Doppelpfeile 15 angedeutet.

Die Sprühabstände H₁ und H₂ zwischen Sprühdüse 3 und zu besprühender Oberfläche 16 sind in Figur 3 in beiden Positionen gleich. In Position 1 hat der auf die zu besprühende Oberfläche 16 auftreffende Sprühstrahl 14 die Breite A₁ und in der Position 2 hat der auf die zu besprühende Oberfläche 16 auftreffende Sprühstrahl 14 die Breite A₂.

Der Übergang von der Sprühbreite A₁ in Position 1 auf die Sprühbreite A₂ in der Position 2 erfolgt beispielsweise stetig durch eine Verringerung der Amplitude der Schwingung des Sprühstrahls. Damit die Sprühschichtdicken d₁ und d₂ überall gleich stark sind, wird gleichzeitig auch der Massestrom proportional verändert. Der Massestrom m, an Reaktivgemisch ist in der Position 1 proportional der Sprühbreite A₁ und der Massestrom m₂ ist proportional zur Sprühbreite A₂.

Eine Alternative zur Anpassung der Masseströme ist die Anpassung der Fahrgeschwindigkeiten der Sprühdüse 3 und des Mischkopfs 4 über den Automaten 8 und zwar umgekehrt proportional zu den Sprühbreiten.

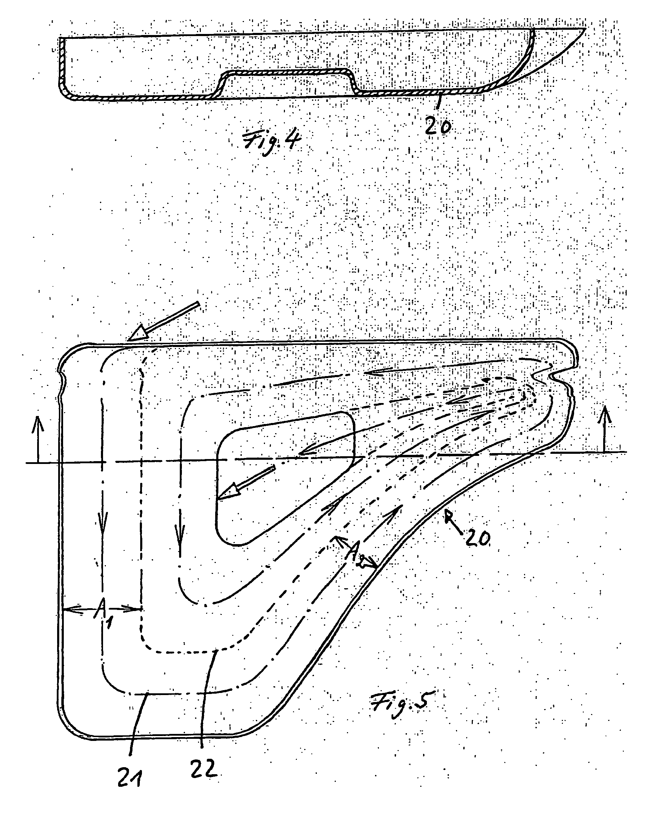

Figur 4 zeigt einen Schnitt durch das in Figur 5 dargestellte Formteil 20, nämlich eine in einer Kavität (nicht dargestellt) hergestellte Haut aus Reaktivkunststoff mit einer über der gesamten Fläche gleich dicken Schichtstärke.

Figur 5 zeigt das gleiche Formteil 20, nämlich eine Haut oder Folie aus Reaktivkunststoff, welche nach dem erfindungsgemäßen Verfahren hergestellt wird. Der gesamte Sprühvorgang erfolgt voll deckend nur in einem Durchgang. Damit die Schichtdicke über der gesamten Fläche überall in etwa gleich ist, ist eine gezielte, schmale Überlappung angrenzender Sprühbahnen erforderlich. Aus diesem Grund wird die Sprühstrahlbreite und proportional dazu auch die Austragsmenge an Reaktivgemisch entsprechend der Formteilgeometrie durch eine programmierbare Steuerung ständig angepasst. An der Position 1 hat die Sprühbahn die Breite A₁ und an der Position 2 hat die Sprühbahn die Breite A₂.

Die strichpunktierte Linie 21 zeigt den Fahrweg des über der Kavität (nicht dargestellt) geführten Mischkopfs bzw. Sprühdüse (ebenfalls nicht dargestellt). Die gestrichelte Linie 22 zeigt die Zusammenflusslinie des beim Sprühauftragen noch flüssigen Reaktivgemisches von angrenzenden Sprühbereichen.

## Patentansprüche

1. Verfahren zur Herstellung ein- oder mehrschichtiger Folien oder Compound-Formteile, die wenigstens eine Schicht aus Reaktivkunststoff aufweisen, bei dem das flüssige Reaktivgemisch aus einer sich relativ zu einer zu besprühenden Oberfläche in eine Fahrtrichtung bewegenden Sprühdüse mit einem Sprühstrahl auf die Oberfläche aufgesprüht wird,
wobei
der Sprühstrahl in Schwingung versetzt wird und die Amplitude und/oder Frequenz der Schwingung während des Sprühvorgangs verstellt wird und **dadurch** die Sprühfläche verändert wird, **dadurch gekennzeichnet, dass** der Sprühstrahl durch Drehung der Sprühdose um eine in Fahrtrichtung weisende Achse in Schwingung versetzt wird.

2. Verfahren nach Anspruch 1, **dadurch gekennzeichnet, dass** der Sprühstrahl mit einer Amplitude von > 0 mm bis 500 mm, bevorzugt mit einer Amplitude von 0,1 mm bis 400 mm, besonders bevorzugt von 0,5 mm bis 300 mm schwingt.

3. Verfahren nach Anspruch 1 oder 2, **dadurch gekennzeichnet, dass** der Sprühstrahl mit einer Frequenz von 5 Hz bis 400 Hz, bevorzugt mit einer Frequenz von 10 Hz bis 300 Hz, besonders bevorzugt mit einer Frequenz von 20 Hz bis 200 Hz schwingt.

4. Verfahren nach Anspruch 1, **dadurch gekennzeichnet, dass** die Verstellung der Amplitude und/oder der Frequenz stetig erfolgt.

5. Verfahren nach Anspruch 1, **dadurch gekennzeichnet, dass** die Verstellung der Amplitude und / oder der Frequenz in einer Rampenfunktion erfolgt.

6. Verfahren nach einem der Ansprüche 1 bis 5, **dadurch gekennzeichnet, dass** der Abstand zwischen der Sprühdüse und der zu besprühenden Oberfläche bei der Verstellung der Amplitude und/oder der Frequenz konstant gehalten wird.

7. Verfahren nach einem der Ansprüche 1 bis 6, **dadurch gekennzeichnet, dass** während der Verstellung der Amplitude und/oder der Frequenz die Austragsmenge an Reaktivgemisch verändert wird.

8. Verfahren nach einem der Ansprüche 1 bis 7, **dadurch gekennzeichnet, dass** während der Verstellung der Amplitude und/oder der Frequenz die Geschwindigkeit der Sprühdüse relativ zu der zu besprühenden Oberfläche verändert wird.

9. Verfahren nach einem der Ansprüche 1 bis 8, **dadurch gekennzeichnet, dass** die Verstellung der Amplitude und/oder der Frequenz positionsabhängig automatisch durch eine Programmsteuerung erfolgen.

10. Verfahren nach einem der Ansprüche 1 bis 9, **dadurch gekennzeichnet, dass** der Mischkopf und die Sprühdüse in Schwingungen versetzt werden.

11. Verfahren nach einem der Ansprüche 1 bis 9, **dadurch gekennzeichnet, dass** nur die Sprühdüse oder die Sprühdüse mit ihrer Verbindung an den Mischkopf in Schwingungen versetzt wird.

12. Verfahren nach einem der Ansprüche 1 bis 11, **dadurch gekennzeichnet, dass** der Schwingung eine zweite, um einen Winkel von > 0° versetzte Schwingung, überlagert wird.

13. Verfahren nach Anspruch 12, **dadurch gekennzeichnet, dass** die Amplituden der um 90° versetzten Schwingungen abhängig voneinander gesteuert werden.

14. Verfahren nach einem der Ansprüche 12 bis 13, **dadurch gekennzeichnet, dass** die größere Amplitude der beiden Schwingungen automatisch durch eine Programmsteuerung rechtwinklig zur Fahrtrichtung des Auftragsautomaten eingestellt wird.

15. Vorrichtung zur Herstellung von ein- oder mehrschichtigen Folien oder Compound-Formteilen, die wenigstens eine Schicht aus Reaktivkunststoff enthalten, umfassend Vorratsbehälter (6) für die Reaktivkomponenten, Dosiereinrichtungen (7) für die Reaktivkomponenten sowie einen Mischkopf (4) und eine sich relativ zu einer zu besprühenden Oberfläche in eine Fahrtrichtung bewegenden Sprühdüse (3),
wobei
die Sprühdüse (3) mit einem Schwingungserzeuger verbunden ist, der die Sprühdüse (3) in Schwingung versetzen kann, wobei der Schwingungserzeuger in Amplitude und/oder Frequenz der Schwingung verstellbar ist **dadurch gekennzeichnet, dass** der Schwingungserzeuger die Sprühdüse durch Drehung der Sprühdüse um eine in Fahrtrichtung weisende Achse in Schwingung versetzen kann.

16. Vorrichtung nach Anspruch 15, **dadurch gekennzeichnet, dass** zwischen Mischkopf (4) und Sprühdüse (3) ein elastisches Glied (13) angeordnet ist.

17. Vorrichtung nach Anspruch 15, **dadurch gekennzeichnet, dass** zwischen Mischkopf (4) und Sprühdüse (3) ein Kugelgelenk angeordnet ist.

18. Vorrichtung nach Anspruch 15, **dadurch gekennzeichnet, dass** zwischen Mischkopf (4) und Sprühdüse (3) ein Faltenbalg angeordnet ist.

## Claims

1. Process for the production of single- or multi-layered films or compound mouldings which have at least one layer of reactive plastic, in which the liquid reactive mixture is sprayed from a spray nozzle with a spray jet on to a surface, which spray nozzle is moving relatively to the surface to be sprayed in a travel direction, wherein the spray jet is set in oscillation and the amplitude and/or frequency of the oscillation is adjusted during the spraying operation and the spray area is thereby changed, **characterized in that** the spray jet is set in oscillation by rotation of the spray nozzle around an axis showing in travel direction.

2. Process according to claim 1, **characterized in that** the spray jet oscillates with an amplitude of > 0 mm to 500 mm, preferably with an amplitude of 0.1 mm to 400 mm, particularly preferably 0.5 to 300 mm.

3. Process according to claim 1 or 2, **characterized in that** the spray jet oscillates with a frequency of 5 Hz to 400 Hz, preferably with a frequency of 10 Hz to 300 Hz, particularly preferably with a frequency of 20 Hz to 200 Hz.

4. Process according to claim 1, **characterized in that** the adjustment of the amplitude and/or frequency takes place constantly.

5. Process according to claim 1, **characterized in that** the adjustment of the amplitude and/or frequency takes place in a ramp function.

6. Process according to one of claims 1 to 5, **characterized in that** the distance between the spray nozzle and the surface to be sprayed is kept constant during the adjustment of the amplitude and/or frequency.

7. Process according to one of claims 1 to 6, **characterized in that** during the adjustment of the amplitude and/or frequency the amount of reactive mixture discharged is changed.

8. Process according to one of claims 1 to 7, **characterized in that** during the adjustment of the amplitude and/or frequency the speed of the spray nozzle relative to the surface to be sprayed is changed.

9. Process according to one of claims 1 to 8, **characterized in that** the adjustment of the amplitude and/or frequency is made according to the position automatically by a program control.

10. Process according to one of claims 1 to 9, **characterized in that** the mixing head and the spray nozzle are set in oscillations.

11. Process according to one of claims 1 to 9, **characterized in that** only the spray nozzle or the spray nozzle with its connection to the mixing head is set in oscillations.

12. Process according to one of claims 1 to 11, **characterized in that** the oscillation is superimposed by a second oscillation displaced by an angle of > 0 °.

13. Process according to claim 12, **characterized in that** the amplitudes of the oscillations displaced by 90° are controlled dependently of one another.

14. Process according to one of claims 12 to 13, **characterized in that** the larger amplitude of the two oscillations is established at a right angle to the travel direction of the automatic applicator automatically by a program control,

15. Device for the production of single- or multi-layer films or compound mouldings which comprise at least one layer of reactive plastic, comprising reservoir containers (6) for the reactive components, metering devices (7) for the reactive components and a mixing head (4) and a spray nozzle (3) moving relatively to the surface to be sprayed in a travel direction, wherein the spray nozzle (3) is connected to an oscillation generator which can set the spray nozzle (3) in oscillation, wherein the oscillation generator being adjustable in amplitude and/or frequency of the oscillation, **characterized in that** the oscillation generator can set the spray nozzle in oscillation by rotation of the spray nozzle around an axis showing in travel direction.

16. Device according to claim 15, **characterized in that** an elastic member (13) is arranged between the mixing head (4) and the spray nozzle (3).

17. Device according to claim 15, **characterized in that** a ball joint is arranged between the mixing head (4) and the spray nozzle (3).

18. Device according to claim 15, **characterized in that** a bellows is arranged between the mixing head (4) and the spray nozzle (3).

## Revendications

1. Procédé pour la fabrication de feuilles à une ou plusieurs couches ou de pièces façonnées composites qui présentent au moins une couche en matériau synthétique réactif, dans lequel le mélange réactif liquide est pulvérisé, par une buse de pulvérisation se déplaçant dans un sens de transport par rapport à la surface à pulvériser, avec un jet de pulvérisation sur la surface, le jet de pulvérisation étant mis en oscillation et l'amplitude et/ou la fréquence de l'oscillation étant réglées pendant le processus de pulvérisation et la surface de pulvérisation étant ainsi modifiée, **caractérisé en ce que** le jet de pulvérisation est mis en oscillation par rotation de la buse de pulvérisation autour d'un axe pointant dans le sens de transport.

2. Procédé selon la revendication 1, **caractérisé en ce que** Le jet de pulvérisation oscille avec une amplitude de > 0 mm à 500 mm, de préférence avec une amplitude de 0,1 mm à 400 mm, de manière particulièrement préférée de 0,5 mm à 300 mm.

3. Procédé selon la revendication 1 ou 2, **caractérisé en ce que** le jet de pulvérisation oscille avec une fréquence de 5 Hz à 400 Hz, de préférence avec une fréquence de 10 Hz à 300 Hz, de manière particulièrement préférée avec une fréquence de 20 Hz à 200 Hz.

4. Procédé selon la revendication 1, **caractérisé en ce que** le réglage de l'amplitude et/ou de la fréquence se produit en continu.

5. Procédé selon la revendication 1, **caractérisé en ce que** le réglage de l'amplitude et/ou de la fréquence se produis selon une fonction suivant une rampe.

6. Procédé selon l'une quelconque des revendications 1 à 5, **caractérisé en ce que** la distance entre la buse de pulvérisation et la surface à pulvériser est maintenue constante lors du réglage de l'amplitude et/ou de la fréquence.

7. Procédé selon l'une quelconque des revendications 1 à 6, **caractérisé en ce que** la quantité évacuée de mélange réactionnel est modifiée pendant le réglage de l'amplitude et/ou de la fréquence.

8. Procédé selon l'une quelconque des revendications 1 à 7, **caractérisé en ce que** la vitesse de la buse de pulvérisation par rapport à la surface à pulvériser est modifiée lors du réglage de l'amplitude et/ou de la fréquence.

9. Procédé selon l'une quelconque des revendications 1 à 8, **caractérisé en ce que** le réglage de l'amplitude et/ou de la fréquence est réalisé en fonction de la position, automatiquement par une commande par logiciel.

10. Procédé selon l'une quelconque des revendications 1 à 9, **caractérisé en ce que** la tête de mélange et la buse de pulvérisation sont mises en oscillation.

11. Procédé selon l'une quelconque des revendications 1 à 9, **caractérisé en ce que** seule la buse de pulvérisation ou la buse de pulvérisation avec son raccord avec la tête de mélange est mise en oscillation.

12. Procédé selon l'une quelconque des revendications 1 à 11, **caractérisé en ce que** l'oscillation est superposée par une deuxième oscillation décalée d'un angle > 0°.

13. Procédé selon la revendication 12, **caractérisé en ce que** les amplitudes des oscillations décalées de 90° sont contrôlées l'une en fonction de l'autre.

14. Procédé selon l'une quelconque des revendications 12 à 13, **caractérisé en ce que** la plus grande amplitude des deux oscillations est réglée automatiquement par une commande par programme perpendiculairement au sens de transport de l'automate d'application.

15. Dispositif pour la fabrication de feuilles à une ou plusieurs couches ou de pièces façonnées composites qui contiennent au moins une couche en matériau synthétique réactif, comprenant un réservoir (6) pour les composants réactifs, des dispositifs de dosage (7) pour les composants réactifs ainsi qu'une tête de mélange (4) et une buse de pulvérisation (3) se déplaçant dans un sens de transport par rapport à une surface à pulvériser, la buse de pulvérisation (3) étant raccordée à un dispositif de mise en oscillation, qui peut mettre la buse de pulvérisation (3) en oscillation, l'amplitude et/ou la fréquence d'oscillation du dispositif de mise en oscillation pouvant être réglées, **caractérisé en ce que** le dispositif de mise en oscillation peut mettre le jet de pulvérisation en oscillation par rotation de la buse de pulvérisation autour d'un axe pointant dans le sens de transport.

16. Dispositif selon la revendication 15, **caractérisé en ce qu'**un élément (13) élastique est disposé entre la tête de mélange (4) et la buse de pulvérisation (3).

17. Dispositif selon la revendication 15, **caractérisé en ce qu'**une articulation à rotule est disposée entre la tête de mélange (4) et la buse de pulvérisation (3).

18. Dispositif selon la revendication 15, **caractérisé en ce qu'**un soufflet est disposé entre la tête de mélange (4) et la buse de pulvérisation (3).
